# FASCICULE DE BREVET EUROPEEN

(11) **EP 3 959 500 B1**
(45) Date de publication et mention de la délivrance du brevet: **19.03.2025**
(21) Numéro de dépôt: 20731905.4
(22) Date de dépôt: 24.04.2020
(51) Int. Cl.: G01N 1/22, G01N 1/40

(54) **DISPOSITIF DE PRÉLÈVEMENT D'UN ÉCHANTILLON D'ÉLÉMENTS D'INTÉRÊTS PRÉSENTS À L'ÉTAT DE TRACES DANS UN GAZ SOUS PRESSION**
VORRICHTUNG ZUM SAMMELN EINER ALS SPUREN IN EINEM DRUCKGAS VORHANDENEN PROBE VON INTERESSIERENDEN ELEMENTEN
DEVICE FOR COLLECTING A SAMPLE OF ELEMENTS OF INTEREST PRESENT AS TRACES IN A PRESSURISED GAS

(30) Priorité: 25.04.2019 FR 1904349
(43) Date de publication de la demande: 02.03.2022
(73) Titulaire: UNIVERSITE DE PAU ET DES PAYS DE L'ADOUR, 64000 Pau (FR); CENTRE NATIONAL DE LA RECHERCHE SCIENTIFIQUE (CNRS), 75016 Paris (FR); Terega, 64000 Pau (FR)
(72) Inventeur: CARRIER, Hervé, 64230 LESCAR (FR); LE HECHO, Isabelle, 64110 GELOS (FR); DARIDON, Jean-Luc, 64000 PAU (FR)
(74) Mandataire: Plasseraud IP
(86) Numéro de dépôt international: PCT/FR2020/050703
(87) Numéro de publication internationale: WO 2020/217031

(56) Documents cités:
- EP-A2- 0 433 211
- WO-A2-2015/035148
- FR-A1- 3 012 750
- GB-A- 2 538 080
- US-A1- 2008 047 370
- US-A1- 2014 345 370
- US-A1- 2018 202 902

## Description

### Domaine technique

La présente invention concerne un dispositif de prélèvement d'éléments d'intérêt présents à l'état de traces dans un gaz tel que gaz naturel ou biogaz circulant dans un conduit. Le dispositif de la présente invention est particulièrement adapté lorsque le gaz est conditionné sous haute pression.

### Technique antérieure

On connaît principalement le gaz naturel, une des principales sources d'énergie commercialisées. La composition chimique du gaz naturel commercialisé comprend principalement du méthane (70-90%), quelques hydrocarbures (7-11%), des impuretés (< 3-15 %) et des éléments d'intérêt présents à l'état de traces. Ces éléments présents à l'état de traces, peuvent être des métaux tels que le mercure et/ou des composés organiques comme les BTEX (benzène, toluène, éthylène et xylènes). Le gaz naturel peut notamment circuler dans une ligne d'alimentation. Il peut être également stocké dans des réservoirs généralement souterrains.

On connaît également d'autres formes de gaz combustibles non fossiles tels que le biogaz dont le traitement permet d'atteindre une composition chimique proche du gaz naturel. Ce biogaz traité appelé également biométhane peut être injecté dans le réseau d'alimentation utilisé pour le gaz naturel. Comme dans le gaz naturel, Il est également possible de trouver dans le biogaz des composés à l'état de traces, notamment des métaux.

La composition chimique du gaz naturel et du biogaz doit répondre à un cahier des charges précis afin de garantir la qualité du gaz. La présence de certains éléments même à l'état de traces peut altérer la qualité du gaz.

Ces éléments à l'état de traces tel que le mercure ou un des composés listés ci-dessus présents dans le gaz naturel peuvent également engendrer des dégâts sur les infrastructures industrielles. Par exemple, le mercure peut être responsable de la corrosion des tubes en aluminium. En outre, lorsque ces éléments sont présents sous forme de particules, ils peuvent entraîner l'abrasion dans les conduits et les pompes.

Enfin, en complément de ces impacts industriels et d'infrastructures, ces éléments métalliques présents même à l'état de traces dans le gaz naturel ou le biogaz peuvent également avoir un impact sur la santé si leur concentration dépasse un certain seuil.

Face à ces contraintes industrielles, environnementales et sanitaires, il est important de pouvoir déterminer régulièrement la composition chimique du gaz et en particulier suivre la présence des éléments traces dans le gaz sous forme dissoute ou particulaire. En effet, cela permet de renseigner non seulement sur la qualité du gaz, mais permet également de prévoir un éventuel impact sur l'environnement et donc indirectement de prévenir les risques sanitaires. En particulier, il est important de déterminer préalablement la concentration de ces éléments avant d'injecter le gaz dans le réservoir de stockage ou dans les réseaux de distribution.

Pour contrôler régulièrement la composition chimique du gaz, on utilise une technique d'échantillonnage qui consiste à prélever un volume de gaz dans une ligne de production ou un réservoir en vue d'une analyse chimique ultérieure par un analyseur adapté. Un exemple de dispositif de prélèvement de gaz est décrit par le document GB2538080A.

L'échantillonnage doit respecter certains critères pour que les échantillons soient représentatifs de la matrice dans laquelle ils sont prélevés. De plus, les échantillons doivent être exempts de toute contamination ou perte d'éléments étudiés. Ainsi les conditions de prélèvement doivent être adaptées aux conditions de terrain des installations (réseaux de distribution, réservoir de stockage) pour éviter toute perte d'information. Dans le cas d'un dispositif d'échantillonnage préconcentré ou de prélèvement, le dispositif doit en plus être conçu dans un matériau permettant d'éviter une pollution de l'échantillon et respecter les conditions du site, par exemples les conditions ATEX. En particulier, les matériaux en contact avec le fluide à prélever doivent être adaptés pour éviter des phénomènes d'adsorption (rétention des molécules) et de désorption (libération des molécules) qui pourraient altérer l'intégrité de l'échantillon prélevé.

En outre, le dispositif d'échantillonnage doit être conçu de manière à garantir la sécurité de l'opérateur et la protection de l'environnement.

On connaît un système d'échantillonnage en ogive qui permet le prélèvement sous pression de gaz par l'utilisation d'un cylindre étanche métallique. Le cylindre, généralement en acier inoxydable, est traversé en continu par le gaz. Lorsque le prélèvement est terminé, l'écoulement du gaz est stoppé par des vannes et le cylindre contenant l'échantillon est retiré du système pour être transporté vers un autre site en vue de son analyse. Le cylindre, sous pression, doit être transporté par une société agréée. L'inconvénient principal de cette technique réside dans l'impossibilité de pré-concentrer les éléments d'intérêt, limitant la faisabilité des mesures lorsque ceux-ci sont présents à des concentrations très faibles (de l'ordre du nanogramme à la centaine de microgrammes par normo-mètre cube). En outre, cette technique nécessite une étape de dépressurisation lors de la phase de transfert du gaz prélevé vers l'analyseur, entraînant un risque de perte d'information.

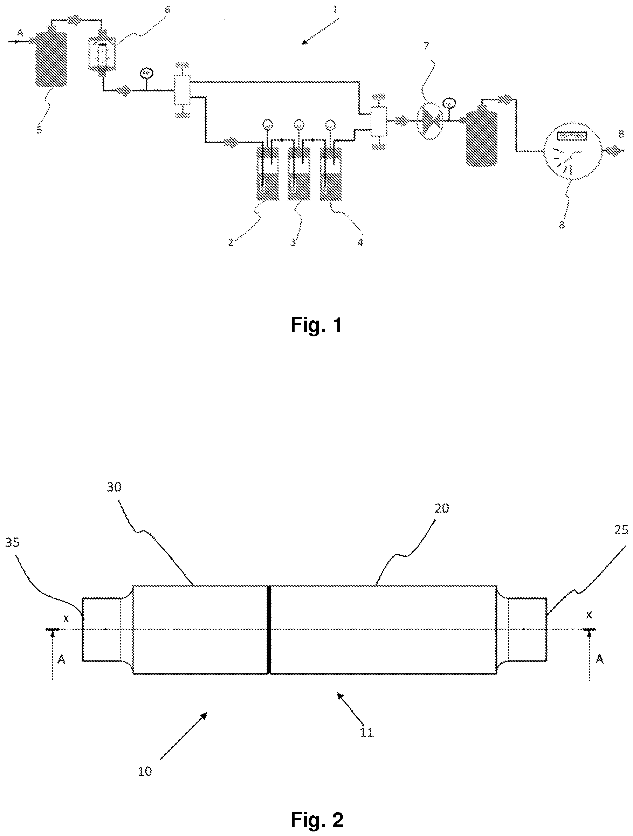

Cachia et al. (Development of a high-pressure bubbling sampler for trace element quantification in natural gas, Energy Fuel 2017, 31, 4294-4300*)* décrivent un système conçu pour pré-concentrer à des pressions variant de 1 à 100 bar avec un débit pouvant atteindre 40 L/min des composés métalliques présents à l'état de trace dans un gaz naturel. Comme l'illustre la figure 1, le système 1 comprend une entrée de gaz A et une sortie de gaz B raccordées aux conduites de gaz et trois barboteurs 2, 3, 4 montés en série. Le gaz arrive à l'entrée A du système et traverse tout d'abord un condenseur 5 et un filtre 6 afin d'éliminer l'eau et les particules solides éventuellement présentes dans le gaz. Ensuite, le gaz circule au travers de trois barboteurs 2, 3, 4. Un barboteur est un cylindre en inox à l'intérieur duquel est disposé un cylindre en Téflon contenant 50 mL d'une solution de piégeage spécifique aux éléments métalliques ciblés. A titre d'exemple, la solution pour le mercure peut être une solution de permanganate 1%w et d'acide sulfurique 5%w. A la sortie des barboteurs, un détenteur 7 déclenche la dépressurisation du gaz échantillonné jusqu'à la pression atmosphérique et un rotamètre 8 comptabilise le volume du gaz échantillonné.

### Problème technique

Le dispositif de prélèvement en ogive de l'art antérieur permet de prélever des échantillons de gaz sous pression. Néanmoins, cette technique ne permet pas de pré-concentrer les éléments, limitant ainsi la faisabilité lorsque ceux-ci sont présents à des concentrations de l'ordre de nanogramme à la centaine de microgrammes par mètre cube. De tels dispositifs nécessitent une installation spécifique, complexe et coûteuse. En outre, ces dispositifs d'échantillonnage impliquent que le banc d'analyse fonctionne à la même pression ou impliquent l'utilisation d'un détenteur afin d'alimenter l'analyseur avec un gaz ayant une pression appropriée. Le fait de transporter un échantillon sous pression nécessite de faire appel à un transporteur agréé depuis le site de prélèvement jusqu'au site d'analyse.

Le système d'échantillonnage par barbotage (Figure 1) sous haute pression permet cette pré-concentration nécessaire de l'échantillon, à la pression d'un réseau comme celle dans les conduites de distribution de gaz naturel. Toutefois un tel système est difficile à nettoyer en raison d'une configuration souvent peu adaptée (volumes morts inaccessibles), ce qui n'est pas compatible avec la recherche de traces. Par ailleurs, la mise en œuvre d'un tel système sur le terrain est relativement complexe du fait de l'utilisation de trois barboteurs. Il présente un encombrement important qui ne facilite ni son transport d'un site à l'autre ni son installation sur le terrain. Enfin le principe même de l'échantillonnage par barbotage avec une solution de permanganate/acide sulfurique pour le mercure ou acide nitrique pour les autres composés métalliques, reste relativement complexe à mettre en œuvre. La solution de piégeage présente en outre un risque pour la propreté du système d'échantillonnage.

La présente invention a pour objectif de proposer un dispositif et un procédé permettant d'effectuer un prélèvement d'un échantillon d'éléments d'intérêt présents à l'état de trace dans un gaz dans les conditions du réseau, notamment à la pression du réseau afin d'éviter toute perte d'information. Le dispositif et le procédé doivent être simples à mettre en œuvre et fiables de sorte que l'échantillon collecté soit représentatif de la matrice dans laquelle il est prélevé. Par ailleurs, compte tenu des faibles concentrations en éléments dans le gaz naturel par exemple, le dispositif proposé doit permettre un échantillonnage préconcentré des éléments d'intérêts. En outre, l'échantillon ainsi prélevé doit nécessiter le moins de préparation avant analyse afin de limiter les éventuelles contaminations et pour préserver l'intégrité de l'échantillon. Enfin, la technique d'analyse associée doit être facile à mettre œuvre.

### Exposé de l'invention

Il est proposé un dispositif de prélèvement d'un échantillon d'éléments d'intérêt présents à l'état de traces dans un fluide gazeux, tel qu'un gaz naturel ou un biogaz circulant sous pression dans un conduit, ledit dispositif comprend :
- un support comprenant une paroi intérieure délimitant un logement étanche, chacune des extrémités du support comportant un orifice de passage du fluide gazeux permettant le passage du fluide gazeux ;
- un tube agencé dans le logement étanche et deux extrémités, un milieu de piégeage d'éléments d'intérêt étant disposé dans le tube;
- des moyens de maintien;
- les deux extrémités du tube étant maintenues en position dans ledit logement par lesdits moyens de maintien, la dimension dudit logement étant configurée de sorte que la paroi extérieure dudit tube et la paroi intérieure du support délimitent un espace libre annulaire;
- lesdits moyens de maintien et l'agencement dudit tube dans le logement étanche étant configurés pour permettre le passage d'une partie du gaz dans l'espace annulaire libre lorsque le gaz entre dans le dispositif afin de mettre l'espace annulaire à la même pression que l'intérieur du tube.

Les caractéristiques exposées dans les paragraphes suivants peuvent, optionnellement, être mises en œuvre. Elles peuvent être mises en œuvre indépendamment les unes des autres ou en combinaison les unes avec les autres:
- le support comprend un premier corps creux et un second corps creux, les deux corps étant configurés pour être assemblés ensemble pour former le logement étanche,
- le premier corps creux comprend une première cavité s'étendant entre une extrémité comportant un premier orifice de passage de gaz et une première ouverture, et le second corps creux comprend une seconde cavité s'étendant entre une extrémité comportant un second orifice de passage de gaz et une seconde ouverture,
- le premier corps comprend à l'extrémité de la première ouverture un filetage externe et le second corps à l'extrémité de la seconde ouverture un filetage interne complémentaire, au moins un joint d'étanchéité annulaire est disposé dans une gorge ménagée à proximité de l'un des filetages de sorte que l'assemblage par vissage des deux corps forme un logement étanche,
- les moyens de maintien comprennent au moins une pièce de maintien sensiblement tubulaire dimensionnée pour être montée sur une extrémité ouverte du tube et reçue dans une extrémité du logement, une pièce de butée sensiblement tubulaire formant une surface d'appui pour l'extrémité ouverte opposée du tube et reçue dans l'extrémité opposée du logement, ladite pièce de butée présentant un passage mettant en communication l'extrémité ouverte du tube avec un orifice de passage de gaz,
- les pièces de maintien sont réalisées dans un matériau inerte et non poreux, par exemple de la famille des poly(aryléthercétones).

Selon une forme avantageuse de réalisation de l'invention, lorsque le tube est positionné dans le logement, une extrémité ouverte du tube est en appui contre une extrémité du logement et en regard par rapport à un orifice de passage de gaz et l'autre extrémité ouverte est en appui contre une pièce de butée placée dans l'autre extrémité du logement et en regard par rapport à l'autre orifice de passage de gaz.

Selon une autre forme avantageuse de réalisation de l'invention, le premier corps comprend un premier canal de guidage mettant en communication l'orifice de passage de gaz avec l'extrémité ouverte du tube et le second corps comprend un second canal de guidage mettant en communication l'autre extrémité ouverte du tube avec le second orifice de passage de gaz (35).

Selon une forme de réalisation de l'invention, le milieu de piégeage est un milieu de piégeage par adsorption.

De préférence, le milieu de piégeage est configuré pour piéger des éléments d'intérêt qui sont des éléments métalliques choisis dans le groupe comprenant le mercure, l'arsenic, l'étain, l'aluminium, le plomb et le titane ou des éléments organiques volatiles tels que les BTEX (benzène, toluène, éthylbenzène, xylène), des hydrocarbures aromatiques polycycliques (HAP) et/ou halogénés.

Avantageusement, le dispositif comprend en outre une vanne connectée à chacune des extrémités du support.

Avantageusement, un des orifices de passage de gaz forme l'entrée de gaz et l'autre orifice de passage de gaz forme la sortie de gaz.

Un autre aspect de l'invention concerne une installation de prélèvement d'un échantillon d'éléments d'intérêt présents à l'état de traces dans un gaz circulant sous haute pression dans un circuit, ladite installation comprenant:
- un dispositif de prélèvement tel que défini ci-dessus ;
- une vanne d'entrée de gaz ;
- un circuit d'alimentation de gaz reliant la vanne d'entrée à une extrémité du dispositif ;
- une vanne de sortie;
- un second circuit d'évacuation de gaz reliant la vanne de sortie à l'autre extrémité du dispositif ;
- un réservoir d'évacuation de gaz connectée à la vanne de sortie ;
- au moins un manomètre pour mesurer la pression de gaz circulant dans l'installation.

Un autre aspect de l'invention concerne un procédé pour réaliser un prélèvement d'un échantillon d'éléments d'intérêt présents à l'état de traces dans un gaz circulant sous haute pression dans un circuit comprenant les étapes suivantes :
- la mise en connexion du dispositif de prélèvement tel que défini ci-dessus au circuit de circulation de gaz ;
- la mise en circulation du gaz au travers du milieu d'adsorption pendant une durée déterminée ;
- l'interruption de la circulation de gaz ;
- l'évacuation de gaz vers un réservoir d'évacuation ;
- le retrait du tube de son support pour réaliser l'analyse de l'échantillon prélevé.

Selon une forme de réalisation de l'invention, le gaz circule sous une pression comprise entre 1 et 1000 bars, de préférence entre 3 et 300 bars.

### Brève description des dessins

D'autres caractéristiques, détails et avantages de l'invention apparaîtront à la lecture de la description détaillée ci-après, et à l'analyse des dessins annexés, sur lesquels :
Fig. 1
   [Fig. 1] montre une vue schématique d'un dispositif de prélèvement d'éléments d'intérêt présents à l'état de trace dans un gaz sous pression selon l'état de la technique;
Fig. 2
   [Fig. 2] montre une vue de l'extérieur d'un dispositif de prélèvement d'un échantillon d'éléments d'intérêt présents à l'état de trace dans un gaz sous pression selon l'invention;
Fig. 3

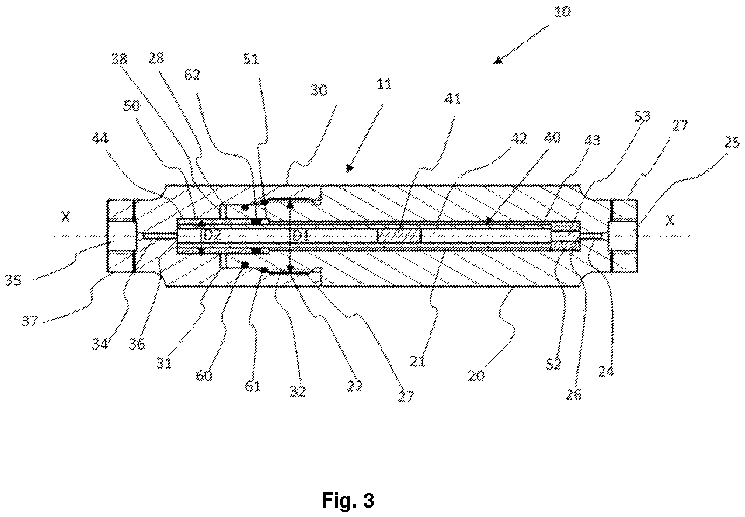

   [Fig. 3] montre une vue en coupe selon un plan de coupe A-A de la figure 2 ;
Fig. 4

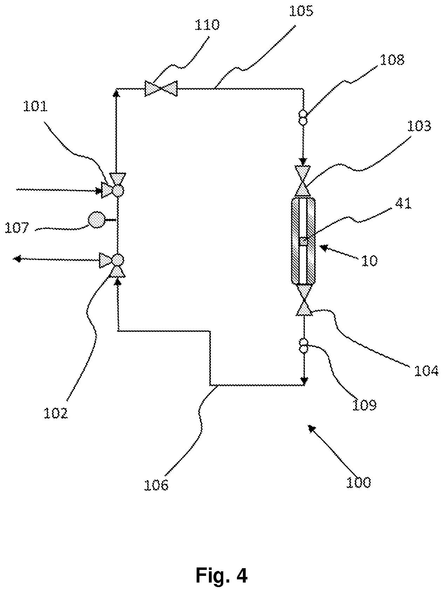

   [Fig. 4] montre une vue schématique d'une installation comprenant un dispositif de prélèvement d'un échantillon d'éléments d'intérêt de la figure 3.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Dans la présente demande, on utilisera le terme « gaz » pour désigner le « gaz naturel » ou le biogaz ou toute autre matrice gazeuse.

Dans le cas d'un gaz naturel, le gaz subit plusieurs étapes depuis son réservoir géologique jusqu'au lieu de consommation. Ces étapes sont la production, le traitement, le transport, le stockage si nécessaire et enfin la distribution. Dans le cas du biogaz, les étapes sont la production, le traitement, le transport et la distribution. Durant ces différentes étapes, il est essentiel de déterminer la composition chimique du gaz tel que gaz naturel ou biogaz, en particulier de déterminer en teneur les éléments d'intérêt présents à l'état de traces dans le gaz.

La figure 2 et la figure 3 illustrent un dispositif de prélèvement d'un échantillon d'éléments d'intérêt 10 selon un mode de réalisation de l'invention.

Les éléments d'intérêt peuvent être des éléments métalliques tels que le mercure, l'étain, l'arsenic, le plomb ou l'aluminium. Ils peuvent également être des composés organiques tels que les BTEX (benzène, toluène, éthylbenzène, xylène). Ils peuvent également être des hydrocarbures aromatiques polycycliques (HAP) et halogénés. Ces éléments sont par exemple dissous dans le gaz ou présents sous forme de particules dans le gaz.

Le dispositif 10 comprend un support 11, la paroi interne du support délimitant un logement étanche, et un tube 40 comportant un milieu de piégeage 41 des éléments d'intérêt maintenu en position dans le logement étanche.

De préférence, le milieu de piégeage est un milieu de piégeage par adsorption pour adsorber les éléments d'intérêts.

A des fins de simplicité, le milieu de piégeage par adsorption sera désigné dans la suite de la description par « le milieu d'adsorption ».

Le support 11 présente une forme sensiblement cylindrique orientée selon un axe principal x-x. Chacune des extrémités du support comprend un orifice de passage 25, 35 pour permettre la circulation du gaz au travers du milieu de piégeage contenu dans le tube.

Selon un mode préféré de réalisation tel qu'illustré sur la figure 4, chacune des extrémités du dispositif 10 est connectée directement à une vanne d'arrêt 103, 104. Ainsi lors de l'opération du prélèvement d'un échantillon, le montage du dispositif sur un circuit de circulation de gaz consiste à connecter les deux vannes aux raccords présents sur le circuit. A la fin de l'opération de prélèvement de l'échantillon, les deux vannes sont fermées pour pouvoir retirer le dispositif du circuit de circulation de gaz.

Selon un mode de réalisation, le support 11 comprend un premier corps creux sensiblement cylindrique 20 et un second creux sensiblement cylindrique 30. Le premier corps creux 20 comprend une extrémité comportant un premier orifice de passage de gaz 25 et une première cavité. Le second corps creux 30 comprend une extrémité comportant un second orifice de passage de gaz 35 et une seconde cavité. Lorsque les deux corps sont assemblés et les deux extrémités du support fermées, les deux cavités forment un logement étanche.

La première cavité se présente sous une forme sensiblement cylindrique qui s'étend selon l'axe x-x entre une ouverture et un orifice de passage de gaz 25. Le fond de la première cavité comprend un trou 26 qui communique avec l'orifice de passage de gaz 25 via un canal de guidage 24.

De préférence, la section de l'orifice de passage de gaz 25 est supérieure à la section du trou 26. La section du trou 26 peut être supérieure ou égale à la section du canal de guidage 24. Dans l'exemple de réalisation illustré sur la figure 3, le canal de guidage 24 se présente sous la forme d'un entonnoir comprenant une partie droite et un cône, la partie droite étant orientée vers le trou 26 et le cône vers l'orifice de passage de gaz 25.

Le premier corps creux cylindrique 20 comprend à l'extrémité de l'ouverture un col 27. Une portion de la paroi externe du col est munie d'un filetage externe 22.

La seconde cavité du second corps creux 30 se présente sous une forme sensiblement cylindrique qui s'étend selon l'axe x-x entre une ouverture et un orifice de passage de gaz 35. Le fond de la seconde cavité comprend un trou 36 qui communique avec l'orifice de passage de gaz 35 via un canal de guidage 34.

De préférence, la section de l'orifice de passage de gaz 35 est supérieure à la section du trou 36. La section du trou 36 peut être supérieure ou égale à la section du canal de guidage 34. Dans l'exemple de réalisation illustré sur la figure 3, le canal de guidage 34 se présente sous la forme d'un entonnoir comprenant une partie droite et un cône, la partie droite étant orientée vers le trou 36 et le cône vers l'orifice de passage de gaz 35.

Comme l'illustre la figure 3, la seconde cavité comprend une première chambre présentant un premier diamètre interne D1 et une seconde chambre présentant un second diamètre interne D2. Le diamètre D1 est ajusté par rapport au diamètre externe du col 27 du premier corps cylindrique pour recevoir le col dans la première chambre, la paroi interne de cette première chambre étant munie d'un filetage interne 32 qui coopère avec le filetage externe 22 du col 27 pour assembler le premier corps avec le second corps par vissage. Lorsque les deux corps sont assemblés ensemble, la première cavité et la seconde cavité définissent ensemble le logement destiné à recevoir le tube 40.

Selon l'exemple illustré sur la figure 3, la longueur du col 27 du premier corps est définie de sorte que lorsque le col est introduit dans la seconde cavité du second corps, l'extrémité 28 du premier corps n'est pas en appui contre le fond 38 de la première chambre du second corps, définissant ainsi un espace annulaire libre 31. Selon une autre forme de réalisation de l'invention, l'extrémité 28 du premier corps est en appui contre le fond 38 de la première chambre du second corps.

Selon l'invention, le logement formé par les deux cavités est un logement étanche afin de pouvoir prélever l'échantillon dans les conditions de circulation du gaz dans le circuit, et notamment sous haute pression, généralement comprise entre 1 et 1000 bars, et de préférence entre 3 bars et 300 bars.

Selon l'exemple illustré sur la figure 3, le col 27 est muni d'une gorge annulaire dans laquelle est reçu un premier anneau d'étanchéité 60. Le diamètre interne D1 de la première chambre du second corps est ajusté par rapport au diamètre externe du col de sorte que lorsque le col est engagé dans la première chambre et maintenu par filetage dans la première chambre, l'anneau d'étanchéité 60 est comprimé radialement entre la paroi interne de la première chambre et le fond de la gorge pour réaliser l'étanchéité.

Selon une variante non illustrée, la paroi interne de la première chambre est munie d'une gorge annulaire dans laquelle est reçu un premier anneau d'étanchéité 60. Le diamètre interne D1 de la première chambre du second corps est ajusté par rapport au diamètre externe du col de sorte que lorsque le col est engagé dans la première chambre et maintenu par filetage dans la première chambre, l'anneau d'étanchéité 60 est comprimé radialement entre la paroi interne de la première chambre et le fond de la gorge pour réaliser l'étanchéité du logement.

Selon une forme illustrée sur la figure 3, le dispositif comprend un deuxième anneau d'étanchéité 61 monté sur le col 27, à proximité du filetage pour renforcer l'étanchéité du logement.

Selon l'invention, le tube 40 comporte un milieu d'adsorption 41. Le tube comporte une première extrémité ouverte formant un orifice d'alimentation de gaz et une seconde extrémité ouverte formant un orifice d'évacuation de gaz.

Selon l'exemple illustré sur la figure 3, lorsque le tube est positionné dans le logement étanche, la première extrémité ouverte 43 du tube est en regard de l'orifice de passage de gaz 25 du support et la seconde extrémité ouverte 44 en regard de l'orifice de passage de gaz 35 du support.

Le tube est par exemple en verre. Le milieu d'adsorption présente une surface recouverte d'une phase adsorbant adaptée aux éléments d'intérêt à adsorber. De préférence, le milieu présente un grand rapport surface sur volume afin d'adsorber efficacement les éléments indésirables.

A titre d'exemple, dans le cas de prélèvement de mercure, le tube d'adsorption est constitué d'un tube en quartz à l'intérieur duquel est disposé un mélange de sable et de particules d'or pour piéger le mercure. Ce dernier a la propriété de s'amalgamer sur l'or à température ambiante et être libéré à haute température. Après la phase de prélèvement, le dispositif est déconnecté du circuit d'alimentation en gaz et le tube est extrait de son support pour être analysé par une technique connue. Plus précisément, le tube est d'abord chauffé à 500 °C pour libérer le mercure adsorbé pendant le piégeage. La quantification du mercure a été ensuite réalisée par spectrométrie à fluorescence atomique.

Selon une caractéristique technique essentielle de l'invention, le tube a un diamètre externe inférieur au diamètre interne du logement de sorte que lorsque le tube est agencé dans le logement, la paroi externe du tube et la paroi interne du support délimitant le logement étanche délimitent un espace libre annulaire 21.

Pour pourvoir délimiter cet espace annulaire 21, le dispositif comprend en outre des moyens de maintien 50, 51, 52 pour maintenir en position le tube dans le logement.

Selon l'exemple illustré sur la figure 3, les moyens de maintien comprennent une première pièce de maintien 50 et une seconde pièce de maintien 51. Les deux pièces présentent une forme sensiblement tubulaire. Leur diamètre interne est ajusté par rapport au diamètre externe du tube de sorte que les deux pièces puissent être montées sur une extrémité 44 du tube. Le diamètre externe des deux pièces 50, 51 est ajusté par rapport au diamètre interne D2 de la seconde chambre du second corps creux 30 pour pouvoir être reçue dans la seconde chambre par insertion. L'extrémité 44 est maintenue en position dans le logement. Ainsi le tube est bloqué en position par l'intermédiaire de ces deux pièces dans le logement formé par les deux cavités.

Avantageusement, les pièces de maintien comprennent en outre une pièce de butée 52 sensiblement tubulaire formant une surface d'appui pour l'extrémité 43 opposée du tube. Le diamètre externe de la pièce de butée est ajusté par rapport au diamètre interne de la cavité du premier corps creux 20 de sorte que la pièce est reçue dans le fond de la cavité du premier corps cylindrique 20. La pièce de butée 52 comporte un passage 53 mettant en communication fluidique l'extrémité ouverte 43 du tube avec l'orifice de passage de gaz 25. L'extrémité du tube 43 vient en butée contre la pièce de butée 52 qui forme ainsi une interface de sécurité pour le tube en verre de sorte que l'extrémité du tube 43 ne puisse pas venir en contact direct contre le fond du premier corps cylindrique qui est en inox, pour limiter ainsi le risque de rupture du tube sous l'effet de la pression du gaz.

Le fait d'assurer le maintien en position du tube dans le logement par les deux extrémités 43, 44 permet de limiter les risques de casser le tube lors de la manipulation du dispositif, par exemple lors de son installation ou de son démontage sur une ligne de fluide. Ces pièces de maintien permettent de positionner de façon simple et aisée le tube dans le logement. Enfin, le fait de maintenir les deux extrémités du tube permet d'éviter un risque d'éjection du tube adsorbant lors d'une ouverture trop brutale de la vanne de la circulation du fluide gazeux.

De préférence, les pièces de maintien 50, 51 et la pièce de butée 52 sont réalisées dans un matériau inertes et non poreux, de la famille des poly(aryléthercétones) (PAEK), tel que le PEEK (poly(éther-éther-cétone de phénylène)).

Selon une forme de réalisation de l'invention telle qu'illustrée sur la figure 3, le dispositif comprend un troisième anneau d'étanchéité 62 dimensionné pour être monté sur le tube, interposé entre les deux pièces de maintien 50, 51. Le diamètre interne de l'anneau d'étanchéité 62 est ajusté par rapport au diamètre externe du tube de sorte que l'anneau 62 puisse être monté sur une extrémité 44 du tube. Le diamètre externe de l'anneau d'étanchéité est ajusté par rapport au diamètre interne du logement du support pour pouvoir être reçu dans le logement par insertion. L'anneau d'étanchéité a donc pour fonction d'une part de participer avec les deux pièces de maintien 50, 51 au maintien en position d'une extrémité du tube et d'autre part à forcer la circulation du gaz dans le tube pour l'empêcher de circuler dans l'espace annulaire autour du tube lorsque le gaz entre dans le dispositif. De cette façon, lorsque par exemple, l'orifice de passage de gaz 35 forme l'entrée de gaz et l'orifice de passage de gaz 25 forme la sortie de gaz, la présence de l'anneau d'étanchéité 62 oblige le gaz lorsqu'il entre dans le dispositif à circuler d'abord dans le tube au travers du milieu d'adsorption 41 avant qu'une partie du gaz passe dans l'espace annulaire libre 21 pour réaliser l'équilibrage de pression entre l'espace annulaire 21 et l'intérieur 42 du tube.

Selon une forme particulièrement avantageuse de l'invention, la dimension du logement est adaptée de sorte que lorsque le tube est positionné dans le logement, la première extrémité du tube 43 est en appui contre la pièce de butée 52 placée dans le fond de la première cavité du premier corps cylindrique 20 et l'autre extrémité 44 est en appui contre le fond de la seconde cavité. Les logements sont dimensionnés de manière à pouvoir utiliser des tubes existants sur le marché et ayant des dimensions standards.

L'espace annulaire 21 défini entre la paroi extérieure du tube 40 et la paroi intérieure du support 11 présente avantageusement un volume très faible, de quelques millilitres, permettant ainsi un dégazage simple et sans risque lors de l'extraction du tube adsorbant pour l'analyse aux conditions ambiantes.

Selon une forme de réalisation particulièrement avantageuse, lorsque le tube 21 est mis en place dans le logement, les deux extrémités ouvertes 43, 44 du tube sont positionnées respectivement en regard du premier canal de guidage 24 et du second canal de guidage 34. Ainsi, l'extrémité ouverte du tube 43 est en communication fluidique directe avec l'orifice de passage de gaz 25 via le premier canal de guidage 43 et l'autre extrémité ouverte du tube 44 est en communication fluidique directe avec l'orifice de passage 35 via le second canal de guidage 34. Cette configuration spécifique permet d'assurer une circulation plus directionnelle du fluide gazeux dans le tube.

Ainsi lorsque le tube est positionné dans le logement et selon l'exemple illustré sur la figure 3, le gaz entre par l'orifice de passage de gaz 35, puis traverse successivement le canal de guidage 34, l'intérieur du tube en passant au travers du milieu d'adsorption 41, le passage 53 de la pièce de butée, le canal de guidage 24 et sort par l'orifice de passage de gaz 25. Le gaz qui entre dans le dispositif passe d'abord dans le tube puis une partie de ce gaz entre dans l'espace annulaire pour équilibrer la pression de part et d'autre de la paroi du tube.

Selon une autre forme de fonctionnement, le gaz entre par l'orifice de passage de gaz 25, puis traverse successivement le canal de guidage 24, le passage 53 de la pièce de butée, l'intérieur du tube en passant au travers du milieu d'adsorption 41, le canal de guidage 34 et sort par l'orifice de passage de gaz 35. Lorsque le gaz entre dans le dispositif, une partie du gaz entre dans l'intérieur du tube et une autre partie du gaz passe tout de suite dans l'espace annulaire pour équilibrer la pression de part et d'autre de la paroi du tube.

De préférence, la section des extrémités ouvertes 43, 44 du tube est supérieure ou égale respectivement à la section du passage 53 et du trou 36.

La figure 4 illustre un exemple d'installation 100 comportant un dispositif de prélèvement 10 d'un échantillon d'éléments d'intérêt présents à l'état de traces dans un gaz selon l'invention.

L'installation comprend une vanne d'alimentation de gaz 101 et une vanne d'évacuation de gaz 102, un premier circuit d'alimentation de gaz 105 reliant la vanne d'entrée 101 à une extrémité formant l'entrée de gaz du dispositif de prélèvement 10 par l'intermédiaire d'un raccord 108 et un second circuit d'évacuation de gaz 106 reliant la vanne de sortie 102 à l'autre extrémité formant la sortie de gaz du dispositif 10 par l'intermédiaire d'un second raccord 109. Pendant le fonctionnement de l'installation, la vanne d'entrée est connectée au circuit de circulation de gaz et la vanne de sortie est connectée à un réservoir d'évacuation. Le gaz circule donc depuis la vanne d'entrée 101 jusqu'à la vanne de sortie 102 en passant par le milieu d'adsorption 41 du dispositif 10. Sur la figure 4, le sens du flux de gaz est indiqué par les flèches. Le gaz, après avoir traversé le milieu d'adsorption, est évacué dans le réservoir. Pendant le fonctionnement, les éléments sont extraits du gaz par adsorption et sont concentrés dans le milieu d'adsorption.

La durée de cette phase d'adsorption est par exemple comprise entre 1 minute à plusieurs jours, en fonction de l'élément d'intérêt, du type de gaz, de la pression et de l'absorbance. Lorsqu'une quantité suffisante de gaz a été traitée, la vanne d'entrée 101 est alors fermée pour initier la phase de purge. Une fois la phase de purge terminée, les vannes 103 et 104 sont fermées afin de pouvoir retirer le dispositif de l'installation.

De préférence, l'installation comprend au moins un manomètre 107 pour mesurer la pression de gaz circulant dans l'installation. Le manomètre est disposé au niveau de l'entrée du gaz. L'installation comprend en outre un débitmètre 110, entre la vanne d'entrée de gaz de l'installation et l'entrée de gaz du dispositif.

Dans l'exemple illustré de la figure 4, les extrémités du dispositif sont équipées d'une vanne d'arrêt 103, 104 qui viennent fermer les orifices de passage de gaz du dispositif. Ainsi le dispositif peut être un module à part entier qui peut être prêt à être utilisé par l'installation et portatif. En outre en disposant d'un module portable, il est possible de disposer plusieurs modules, chacun étant équipé d'un milieu d'adsorption spécifique à un élément indésirable à quantifier.

Le fonctionnement de l'installation 100 est décrit ci-dessous.

En position de prélèvement d'échantillon, les quatre vannes sont en position ouverte de sorte que le gaz circule sous pression dans le circuit de l'installation depuis la vanne d'entrée 101 jusqu'à la vanne de sortie 105 en traversant le dispositif 10.

Lorsque l'échantillonnage est terminé, la vanne 101 du dispositif 10 est fermée, ce qui isole le dispositif de la ligne d'alimentation. Les vannes 103, 104 et 102 restent ouvertes pour purger le gaz. Une fois la phase de purge terminée, les vannes 103, 104, et 102 sont fermées et on peut procéder au retrait du dispositif de l'installation.

Le support est ensuite ouvert en dévissant les deux corps cylindriques pour extraire le tube d'adsorption en vue de l'analyse de l'échantillon prélevé.

### Application industrielle

L'invention s'applique à tous les gaz et plus particulièrement au gaz naturel ou biogaz circulant sous pression dans un circuit grâce à un support d'équilibrage de pression qui permet de pouvoir soumettre un tube d'adsorption qui fonctionne classiquement à pression atmosphérique à une pression élevée.

Un tel tube d'adsorption est particulièrement adapté pour extraire des éléments d'intérêt tels que des éléments métalliques ou des composés organiques volatiles présents à l'état trace dans un gaz tel qu'un gaz naturel ou biogaz.

## Revendications

1. Dispositif de prélèvement (10) d'un échantillon d'éléments d'intérêt présents à l'état de traces dans un fluide gazeux circulant sous pression dans un conduit, ledit dispositif comprend :
- un support (11) comprenant une paroi intérieure délimitant un logement étanche et deux extrémités, chacune des extrémités du support comportant un orifice de passage du fluide gazeux (25, 35) permettant le passage du fluide gazeux ;
- un tube (40) agencé dans le logement étanche, un milieu de piégeage (41) d'éléments d'intérêt étant disposé dans le tube;
- des moyens de maintien (50, 51, 52) ; **caractérisé en ce que** :
- les deux extrémités (43, 44) dudit tube (40) étant maintenues en position dans ledit logement par lesdits moyens de maintien (50, 51, 52), la dimension dudit logement étant configurée de sorte que la paroi extérieure dudit tube et la paroi intérieure du support délimitent un espace libre annulaire (21) ;
- lesdits moyens de maintien (50, 51, 52) et l'agencement dudit tube dans le logement étanche étant configurés pour permettre le passage d'une partie du gaz dans l'espace annulaire libre (21) lorsque le gaz entre dans le dispositif afin de mettre l'espace annulaire (21) à la même pression que l'intérieur (42) du tube.

2. Dispositif selon la revendication 1, dans lequel le support (11) comprend un premier corps creux (20) et un second corps creux (30), les deux corps étant configurés pour être assemblés ensemble pour former le logement étanche.

3. Dispositif selon la revendication 2, dans lequel le premier corps creux (20) comprend une première cavité s'étendant entre une extrémité comportant un premier orifice de passage de gaz (25) et une première ouverture, et le second corps creux (30) comprend une seconde cavité s'étendant entre une extrémité comportant un second orifice de passage de gaz (35) et une seconde ouverture.

4. Dispositif selon la revendication 2 ou 3, dans lequel le premier corps comprend à l'extrémité de la première ouverture un filetage externe (22) et le second corps à l'extrémité de la seconde ouverture un filetage interne complémentaire (32), au moins un joint d'étanchéité annulaire (60, 61) est disposé dans une gorge ménagée à proximité de l'un des filetages de sorte que l'assemblage par vissage des deux corps forme un logement étanche.

5. Dispositif selon l'une des revendications 1 à 4, dans lequel les moyens de maintien comprennent au moins une pièce de maintien (50, 51) sensiblement tubulaire dimensionnée pour être montée sur une extrémité ouverte (44) du tube (40) et reçue dans une extrémité du logement, une pièce de butée (52) sensiblement tubulaire formant une surface d'appui pour l'extrémité ouverte opposée (43) du tube et reçue dans l'extrémité opposée du logement, ladite pièce de butée (52) présentant un passage (53) mettant en communication l'extrémité ouverte (43) du tube avec un orifice de passage de gaz (25).

6. Dispositif selon la revendication 5, dans lequel les pièces de maintien (50, 51, 52) sont réalisées dans un matériau inerte et non poreux de la famille des poly(aryléthercétones) (PAEK).

7. Dispositif selon l'une des revendications à 1 à 6, dans lequel lorsque le tube est positionné dans le logement, une extrémité ouverte (44) du tube est en appui contre une extrémité du logement et en regard par rapport à un orifice de passage de gaz (35) et l'autre extrémité ouverte (43) est en appui contre une pièce de butée (52) placée dans l'autre extrémité du logement et en regard par rapport à l'autre orifice de passage de gaz (25).

8. Dispositif selon la revendication 2 et l'une des revendications 3 à 7, dans lequel le premier corps (20) comprend un premier canal de guidage (24) mettant en communication l'orifice de passage de gaz (25) avec une extrémité ouverte (43) du tube et le second corps (30) comprend un second canal de guidage (34) mettant en communication l'autre extrémité ouverte (44) du tube avec le second orifice de passage de gaz (35).

9. Dispositif selon l'une des revendications 1 à 8, dans lequel le milieu de piégeage (41) est un milieu de piégeage par adsorption.

10. Dispositif selon l'une des revendications 1 à 9, dans lequel le milieu de piégeage (41) est configuré pour piéger des éléments d'intérêt qui sont des éléments métalliques choisis dans le groupe comprenant le mercure, l'arsenic, l'étain, l'aluminium, le plomb et le titane ou des éléments organiques volatiles tels que les BTEX (benzène, toluène, éthylbenzène, xylène), des hydrocarbures aromatiques polycycliques (HAP) et/ou halogénés.

11. Dispositif selon l'une des revendications 1 à 10 comprenant en outre une vanne (103, 104) connectée à chacune des extrémités (27, 37) du support (11).

12. Dispositif selon l'une des revendications 1 à 11, dans lequel un des orifices de passage de gaz forme l'entrée de gaz et l'autre orifice de passage de gaz forme la sortie de gaz.

13. Installation (100) de prélèvement d'un échantillon d'éléments d'intérêt présents à l'état de traces dans un gaz circulant sous haute pression dans un circuit comportant :
- un dispositif de prélèvement (10) selon l'une des revendications 1 à 12 ;
- une vanne d'entrée de gaz (101) ;
- un circuit d'alimentation de gaz (105) reliant la vanne d'entrée à une extrémité du dispositif ;
- une vanne de sortie (102) ;
- un second circuit d'évacuation de gaz (106) reliant la vanne de sortie à l'autre extrémité du dispositif ;
- un réservoir d'évacuation de gaz connectée à la vanne de sortie ;
- au moins un manomètre (107) pour mesurer la pression de gaz circulant dans l'installation.

14. Procédé pour réaliser un prélèvement d'un échantillon d'éléments d'intérêt présents à l'état de traces dans un gaz circulant sous haute pression dans un circuit comprenant les étapes suivantes :
- mise en connexion du dispositif de prélèvement selon l'une des revendications 1 à 12 au circuit de circulation de gaz ;
- mise en circulation du gaz au travers du milieu d'adsorption (41) pendant une durée déterminée ;
- interruption de la circulation de gaz ;
- évacuation du gaz vers un réservoir d'évacuation ;
- retrait du tube de son support pour réaliser l'analyse de l'échantillon prélevé.

15. Procédé selon la revendication 14, dans lequel le gaz circule sous une pression comprise entre 1 et 1000 bars, de préférence entre 3 et 300 bars.

## Patentansprüche

1. Vorrichtung (10) zur Entnahme einer Probe von Elementen, die in Spuren in einem gasförmigen Fluid vorhanden sind, das unter Druck in einer Leitung zirkuliert, wobei die Vorrichtung umfasst:
- einen Träger (11) mit einer Innenwand, die eine dichte Aufnahme begrenzt, und zwei Enden, wobei jedes der Enden des Trägers eine Durchgangsöffnung für das gasförmige Fluid (25, 35) aufweist, die den Durchgang des gasförmigen Fluids ermöglicht,
- ein Rohr (40), das in der dichten Aufnahme angeordnet ist, wobei ein Einfangmedium (41) für die betreffenden Elemente in dem Rohr angeordnet ist,
- Haltemittel (50, 51, 52), **dadurch gekennzeichnet, dass**:
- die beiden Enden (43, 44) des Rohrs (40) durch die Haltemittel (50, 51, 52) in der Aufnahme in Position gehalten werden, wobei die Abmessung der Aufnahme derart ausgebildet ist, dass die Außenwand des Rohrs und die Innenwand des Trägers einen freien Ringraum (21) begrenzen,
- wobei die Haltemittel (50, 51, 52) und die Anordnung des Rohrs in der dichten Aufnahme dazu ausgebildet sind, dass ein Teil des Gases in den freien Ringraum (21) strömen kann, wenn das Gas in die Vorrichtung eintritt, um den Ringraum (21) auf den gleichen Druck wie das Innere (42) des Rohrs zu bringen.

2. Vorrichtung nach Anspruch 1, wobei der Träger (11) einen ersten Hohlkörper (20) und einen zweiten Hohlkörper (30) umfasst, wobei die beiden Körper derart ausgebildet sind, dass sie zusammengebaut werden können, um die dichte Aufnahme zu bilden.

3. Vorrichtung nach Anspruch 2, wobei der erste Hohlkörper (20) einen ersten Hohlraum umfasst, der sich zwischen einem Ende mit einer ersten Gasdurchgangsöffnung (25) und einer ersten Öffnung erstreckt, und der zweite Hohlkörper (30) einen zweiten Hohlraum umfasst, der sich zwischen einem Ende mit einer zweiten Gasdurchgangsöffnung (35) und einer zweiten Öffnung erstreckt.

4. Vorrichtung nach Anspruch 2 oder 3, wobei der erste Körper am Ende der ersten Öffnung ein Außengewinde (22) und der zweite Körper am Ende der zweiten Öffnung ein komplementäres Innengewinde (32) aufweist, wobei wenigstens eine ringförmige Dichtung (60, 61) in einer in der Nähe eines der Gewinde ausgesparten Nut angeordnet ist, so dass die Schraubverbindung der beiden Körper eine dichte Aufnahme bildet.

5. Vorrichtung nach einem der Ansprüche 1 bis 4, wobei die Haltemittel wenigstens ein im Wesentlichen rohrförmiges Halteteil (50, 51) umfassen, das dazu bemessen ist, an einem offenen Ende (44) des Rohrs (40) angebracht zu werden und in einem Ende der Aufnahme aufgenommen zu werden, wobei ein im Wesentlichen rohrförmiges Anschlagstück (52) eine Anflagefläche für das gegenüberliegende offene Ende (43) des Rohrs bildet und in dem gegenüberliegenden Ende der Aufnahme aufgenommen ist, wobei das Anschlagstück (52) einen Durchgang (53) aufweist, der das offene Ende (43) des Rohrs mit einer Gasdurchgangsöffnung (25) in Verbindung bringt.

6. Vorrichtung nach Anspruch 5, wobei die Halteteile (50, 51, 52) aus einem inerten, nicht porösen Material aus der Familie der Poly(aryletherketone) (PAEK) hergestellt sind.

7. Vorrichtung nach einem der Ansprüche 1 bis 6, wobei, wenn das Rohr in der Aufnahme positioniert ist, ein offenes Ende (44) des Rohrs an einem Ende der Aufnahme anliegt und in Bezug auf eine Gasdurchgangsöffnung (35) gegenüberliegt, und das andere offene Ende (43) an einem Anschlagstück (52) anliegt, das in dem anderen Ende der Aufnahme angeordnet ist und in Bezug auf die andere Gasdurchgangsöffnung (25) gegenüberliegt.

8. Vorrichtung nach Anspruch 2 und einem der Ansprüche 3 bis 7, wobei der erste Körper (20) einen ersten Führungskanal (24) aufweist, der die Gasdurchgangsöffnung (25) mit einem offenen Ende (43) des Rohrs verbindet, und der zweite Körper (30) einen zweiten Führungskanal (34) aufweist, der das andere offene Ende (44) des Rohrs mit der zweiten Gasdurchgangsöffnung (35) verbindet.

9. Vorrichtung nach einem der Ansprüche 1 bis 8, wobei das Einfangmedium (41) ein Adsorptions-Einfangmedium ist.

10. Vorrichtung nach einem der Ansprüche 1 bis 9, wobei das Einfangmedium (41) dazu ausgebildet ist, betreffende Elemente einzufangen, bei denen es sich um metallische Elemente, gewählt aus der Gruppe, umfassend Quecksilber, Arsen, Zinn, Aluminium, Blei und Titan, oder um flüchtige organische Elemente wie BTEX (Benzol, Toluol, Ethylbenzol, Xylol), polyzyklische aromatische Kohlenwasserstoffe (PAK) und/oder Halogene handelt.

11. Vorrichtung nach einem der Ansprüche 1 bis 10, die ferner ein Ventil (103, 104) umfasst, das mit jedem der Enden (27, 37) des Trägers (11) verbunden ist.

12. Vorrichtung nach einem der Ansprüche 1 bis 11, wobei eine der Gasdurchgangsöffnungen den Gaseinlass bildet und die andere Gasdurchgangsöffnung den Gasauslass bildet.

13. Anlage (100) zur Entnahme einer Probe von betreffenden Elementen, die in Spuren in einem Gas vorhanden sind, das unter hohem Druck in einem Kreislauf zirkuliert, umfassend:
- eine Probenentnahmevorrichtung (10) nach einem der Ansprüche 1 bis 12,
- ein Gaseinlassventil (101),
- einen Gaszufuhrkreislauf (105), der das Einlassventil mit einem Ende der Vorrichtung verbindet,
- ein Auslassventil (102),
- einen zweiten Gasabzugskreislauf (106), der das Auslassventil mit dem anderen Ende der Vorrichtung verbindet,
- ein mit dem Auslassventil verbundener Gasabzugstank,
- wenigstens ein Manometer (107) zum Messen des Drucks des in der Anlage zirkulierenden Gases.

14. Verfahren zur Entnahme einer Probe von betreffenden Elementen, die in Spuren in einem Gas vorliegen, das unter hohem Druck in einem Kreislauf zirkuliert, umfassend die folgenden Schritte:
- Verbinden der Probenentnahmevorrichtung nach einem der Ansprüche 1 bis 12 mit dem Gaskreislauf,
- Zirkulierenlassen des Gases durch das Adsorptionsmedium (41) für eine bestimmte Zeitdauer,
- Unterbrechung des Gaskreislaufs,
- Abziehen des Gases in einen Abzugstank ,
- Entfernen des Rohrs aus seiner Halterung, um die Analyse der entnommenen Probe durchzuführen.

15. Verfahren nach Anspruch 14, wobei das Gas bei einem Druck zwischen 1 und 1000 bar, bevorzugt zwischen 3 und 300 bar, zirkuliert.

## Claims

1. A device (10) for collecting a sample of elements of interest present as traces in a gaseous fluid circulating under pressure in a pipe, said device comprises:
- a support (11) comprising an internal wall delimiting a sealed compartment, each of the ends of the support including a gaseous fluid passage orifice (25, 35) enabling the passage of the gaseous fluid;
- a tube (40) arranged in the sealed compartment, a medium (41) for trapping elements of interest being arranged in the tube;
- holding means (50, 51, 52);
**characterised in that**:
- the two ends (43, 44) of said tube (40) being held in position in said compartment by said holding means (50, 51, 52), the dimension of said compartment being configured so that the external wall of said tube and the internal wall of the support delimit an annular free space (21);
- said holding means (50, 51, 52) and the arrangement of said tube in the sealed compartment being configured to enable the passage of a portion of the gas in the free annular space (21) when the gas enters the device in order to set the annular space (21) at the same pressure as the inside (42) of the tube.

2. The device according to claim 1, wherein the support (11) comprises a first hollow body (20) and a second hollow body (30), the two bodies being configured to be assembled together to form the sealed compartment.

3. The device according to claim 2, wherein the first hollow body (20) comprises a first cavity extending between an end including a first gas passage port (25) and a first opening, and the second hollow body (30) comprises a second cavity extending between an end including a second gas passage orifice (35) and a second opening.

4. The device according to claim 2 or 3, wherein the first body comprises at the end of the first opening an external thread (22) and the second body at the end of the second opening a complementary internal thread (32), at least one annular sealing gasket (60, 61) is arranged in a groove formed proximate to one of the threads so that the screwed assembly of the two bodies forms a sealed compartment.

5. The device according to one of claims 1 to 4, wherein the holding means comprise at least one substantially tubular holding part (50, 51) sized so as to be mounted on an open end (44) of the tube (40) and received in one end of the compartment, a substantially tubular stop part (52) forming a bearing surface for the opposite open end (43) of the tube and received in the opposite end of the compartment, said stop part (52) having a passage (53) setting the open end (43) of the tube in communication with a gas passage orifice (25).

6. The device according to claim 5, wherein the holding parts (50, 51, 52) are made of an inert and non-porous material of the polyaryletherketone (PAEK) family.

7. The device according to one of claims 1 to 6, wherein when the tube is positioned in the compartment, an open end (44) of the tube bears against one end of the compartment and opposite a gas passage orifice (35) and the other open end (43) bears against an stop part (52) placed in the other end of the compartment and opposite the other gas passage orifice (25).

8. The device according to claim 2 and one of claims 3 to 7, wherein the first body (20) comprises a first guide channel (24) setting the gas passage orifice (25) in communication with an open end (43) of the tube and the second body (30) comprises a second guide channel (34) setting the other open end (44) of the tube in communication with the second gas passage orifice (35).

9. The device according to one of claims 1 to 8, wherein the trapping medium (41) is an adsorption trapping medium.

10. The device according to one of claims 1 to 9, wherein the trapping medium (41) is configured to trap elements of interest which are metal elements selected from the group comprising mercury, arsenic, tin, aluminium, lead and titanium or volatile organic elements such as BTEX (benzene, toluene, ethylbenzene, xylene), polycyclic aromatic hydrocarbons (PAHs) and/or halogenated hydrocarbons.

11. The device according to one of claims 1 to 10 further comprising a valve (103, 104) connected at each of the ends (27, 37) of the support (11).

12. The device according to one of claims 1 to 11, wherein one of the gas passage orifices forms the gas inlet and the other gas passage orifice forms the gas outlet.

13. A facility (100) for collecting a sample of elements of interest present as traces in a gas circulating under high pressure in a circuit including:
- a collection device (10) according to one of the claims 1 to 12;
- a gas inlet valve (101);
- a gas supply circuit (105) connecting the inlet valve to an end of the device;
- an outlet valve (102);
- a second gas evacuation circuit (106) connecting the outlet valve to the other end of the device;
- a gas evacuation tank connected to the outlet valve;
- at least one pressure gauge (107) for measuring the pressure of the gas circulating in the facility.

14. A method for carrying out a collection of a sample of elements of interest present as traces in a gas circulating under high pressure in a circuit comprising the following steps:
- connecting the collection device according to one of claims 1 to 12 to the gas circulation circuit;
- circulating the gas through the adsorption medium (41) for a determined duration;
- interrupting the gas circulation;
- evacuating the gas towards an evacuation tank;
- removing the tube from its support to carry out the analysis of the collected sample.

15. The method according to claim 14, wherein the gas circulates under a pressure comprised between 1 and 1,000 bar, preferably between 3 and 300 bar.
